Europäisches Patentamt

European Patent Office

Office européen des brevets

(19)

(11) Numéro de publication: **0 047 691
B1**

(12) **FASCICULE DE BREVET EUROPEEN**

(45) Date de publication du fascicule du brevet:
30.05.84

(51) Int. Cl.³: **C 03 B  37/16,** C 03 B  37/14

(21) Numéro de dépôt: 81401337.1

(22) Date de dépôt: 25.08.81

(54) **Outillage servant à préparer des câbles optiques à plusieurs fibres en vue de leur aboutement fibre à fibre.**

(30) Priorité: 05.09.80  FR 8019255

(43) Date de publication de la demande:
17.03.82 Bulletin 82/11

(45) Mention de la délivrance du brevet:
30.05.84 Bulletin 84/22

(84) Etats contractants désignés:
DE GB IT

(56) Documents cités:
FR - A - 2 445 972
US - A - 4 017 013

(73) Titulaire: **SOCAPEX, 10 bis, quai Léon Blum,
F-92153 Suresnes (FR)**

(72) Inventeur: **Lamarche, Dominique,
THOMSON-CSF-SCPI 173, bld Haussmann,
F-75360 Paris Cedex 08 (FR)**
Inventeur: **Soster, Marie-Claude,
THOMSON-CSF-SCPI 173, bld Haussmann,
F-75360 Paris Cedex 08 (FR)**
Inventeur: **Malinge, Jean-Louis,
THOMSON-CSF-SCPI 173, bld Haussmann,
F-75360 Paris Cedex 08 (FR)**

(74) Mandataire: **Vesin, Jacques et al, THOMSON-CSF
SCPI 173, Bld Haussmann, F-75379 Paris Cedex 08 (FR)**

## Description

L'invention concerne un outillage permettant de préparer des câbles comportant, chacun, plusieurs fibres optiques, en vue de faciliter leur jonction fibre à fibre. Un tel outillage est conçu de façon à faciliter notamment la jonction de deux câbles à dix fibres disposées dans les rainures périphériques d'un corps central isolant (jonc), lesdites rainures étant creusées de telle sorte que l'ensemble des fibres optiques forment une torsade. Ce type de câble est dit «cylindrique rainuré».

On sait que, pour «épissurer» deux câbles optiques, une excellente solution, bien que difficile à mettre en œuvre de façon rigoureuse, consiste à mettre les fibres dans un même plan, puis à les couper suivant des sections planes aussi parfaites que possible et parfaitement alignées, enfin à les souder en aboutant les deux câbles traités de façon identique, fibre à fibre.

L'invention fournit un ensemble de moyens permettant d'arriver à ce résultat de façon rigoureuse, sans exiger d'habilité manuelle exceptionnelle.

L'outillage selon l'invention, servant à préparer les câbles optiques comporte des moyens d'étalement des fibres d'un même câble optique dans un plan unique sur une partie de la longueur du câble et est caractérisé en ce que ces moyens comprendent un premier peigne comportant des encoches capables d'engrener les fibres situées d'un même côté d'un plan diamétral du câble optique et un deuxième peigne capable d'engrener les fibres situées de l'autre côté du plan diamétral, ce plan étant matérialisé par deux lames, en ce que les dents d'un même peigne ont un profil déterminé de manière à ne pas déranger la configuration des fibres situées du côte opposé au plan diamétral, et en ce qu'il comporte en outre des moyens permettant de ramener l'ensemble des fibres ainsi engrenées dans un même plan par rotations indépendantes des peignes.

D'autres particularités de l'invention ressortiront des revendications 2 à 7 et de la description qui suit, donnée à titre d'exemple non limitatif et illustrée par les figures annexées, parmi lesquelles:
— les figures 1 à 4 représentent différentes phases d'engrènement des fibres optiques par les peignes,
— les figures 5 et 6 sont des vues, sous des angles différents, d'une partie des moyens associés aux peignes,
— la figure 7 représente un ensemble de moyens mécaniques de manipulation des peignes et des organes qui leur sont associés,
— les figures 8, 9 et 10 représentent, sous des angles de vue différents, des moyens de serrage du câble et des fibres qui en émergent,
— les figures 11 à 14 représentent différentes phases d'engrènement des fibres optiques par les peignes, identiques à celles représentées sur les figures 1 à 4, à l'aide d'un peigne de forme préférentielle.

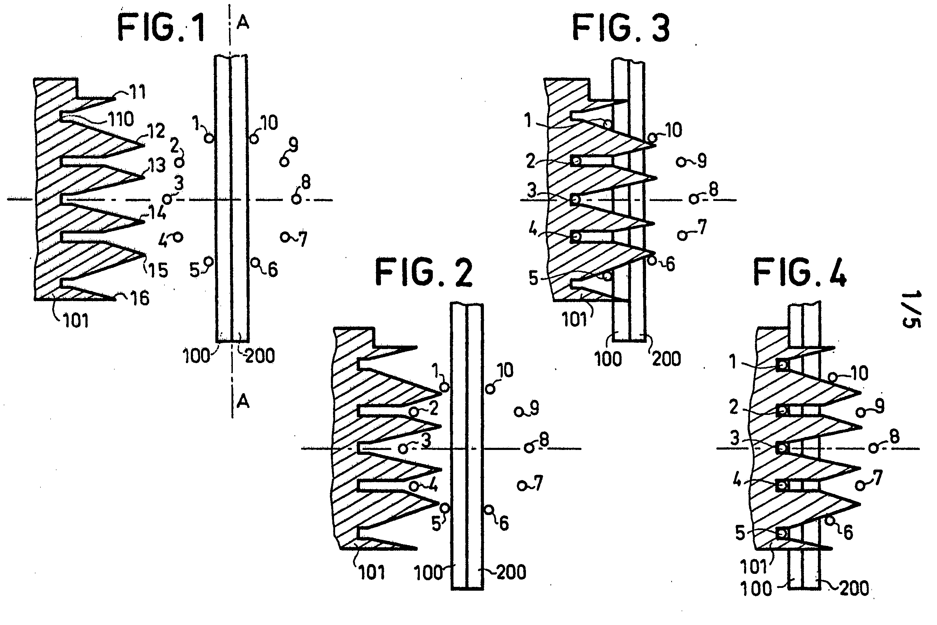

Sur la figure 1, on a représenté en coupe dix fibres optiques 1 à 10 d'un câble optique, dont par ailleurs on n'a pas représenté les autres éléments constitutifs. Il convient de signaler que ce câble a été préalablement décapé de manière à faire épanouir les dix fibres et que le corps isolant central (ou jonc) a été sectionné dans la partie décapée. Par des moyens qui seront décrits et représentés par la suite, on immobilise la partie non décapée et l'on redonne aux fibres une configuration circulaire à la sortie du câble.

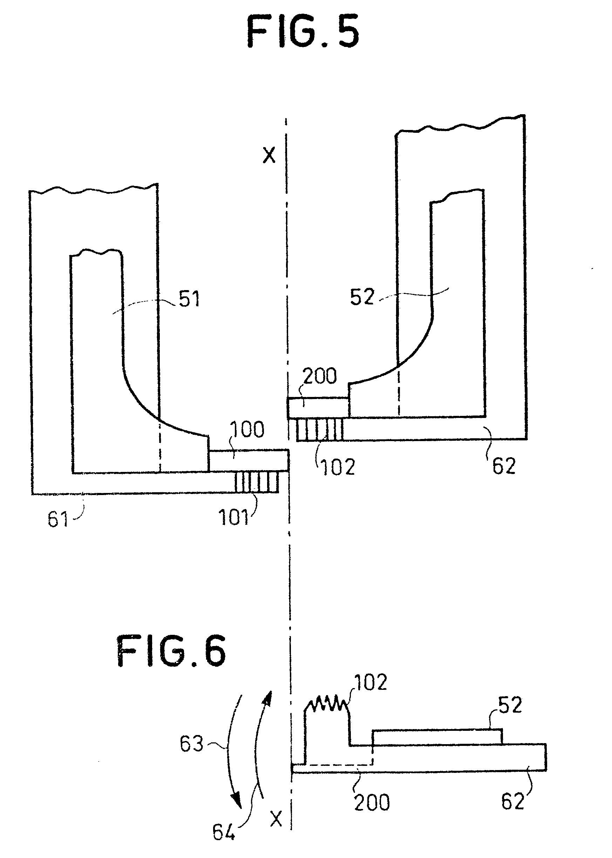

La séparation des fibres en deux groupes, de part et d'autre d'un plan vertical, AA, est matérialisée, pour faciliter la suite des opérations, par l'introduction de deux lames 100 et 200 dont on a dessiné chaque tranche à la figure 1. Il convient de noter que les peignes et les lames sont situés dans des positions décalées pour éviter toute gêne dans leurs actions respectives, ce qui apparaitra plus clairement à la figure 5. Si le plan de la figure 1 est le plan de coupe médian du premier peigne (101), la lame 100 est située en arrière de ce plan, la lame 200 est encore plus en arrière. On n'a pas représenté à la figure 1 le deuxième peigne 102, qui apparait figure 5.

Le peigne 101 comporte six dents 11 à 16, déterminant entre elles cinq encoches 110. Le fond de chaque encoche est équidistant des fonds des encoches voisines, autrement dit les intervalles sont égaux. Le profil de chaque encoche est déterminé par ailleurs de façon à se raccorder aux dents, lesquelles ne sont pas équidistantes, afin de permettre l'engrènement de fibres disposées suivant une configuration cylindrique. D'autre part, le profil des dents est déterminé de manière à ne pas déranger la configuration des fibres du groupe situé du côté opposé du plan AA. Enfin, lorsque l'outillage est bien réglé, le plan médian de l'encoche médiane se confond avec le plan diamétral perpendiculaire au plan AA.

Les figures 2, 3 et 4 montrent les positions relatives des fibres et des dents du peigne 101 au cours de l'opération d'engrènement. A la figure 2, aucune fibre n'a encore été déviée de sa position d'origine. A la figure 3, toutes les fibres du groupe 1 à 5 sont en contact avec les dents du peigne 101, les fibres 2 à 4 étant seules enchlanchées à fond. Il en est de même de la figure 4, avec la différence que les fibres 1 à 5 sont à leur tour engrenées à fond. Il y a lieu de noter que les dents ont des formes telles que les fibres 6 à 10 ne soient pas déviées de leur position d'origine par le mouvement du peigne 101. Ainsi, les peignes 101 et 102 (voir figure 5) ne se gênent pas.

Les figures 1 à 4 permettent de déterminer les distances des encoches et les profils des dents du peigne. On remarque que les pointes des dents 12 à 15 sont disposées de manière à ce que leur projection sur le plan XX soit équidistante des projections sur le même plan des fibres 1 et 2 (pour la dent 12), 2 et 3 (pour la dent 13) etc . . . En outre, on remarque, aux figures 3 et 4, que les profils des dents 12 et 15 sont dessinés de manière à ne pas faire dévier les fibres 6 et 10 respectivement au cours de l'engrènement.

A la figure 5, on a représenté les parties mécaniques ou «manches» 61 et 62 des peignes 101 et 102 (vus par la tranche, donc apparaissant sous forme de traits parallèles correspondant aux dents et encoches, représentés en nombre restreint pour simplifier le dessin). On a représenté aussi les manches 51 et 52 des lames 100 et 200.

A la figure 6, le peigne 102 est vu de profil comme aux figures 1 à 4, mais représenté ici avec une partie de son manche 62. Il en est de même de la lame 200 représentée avec une partie de son manche 52.

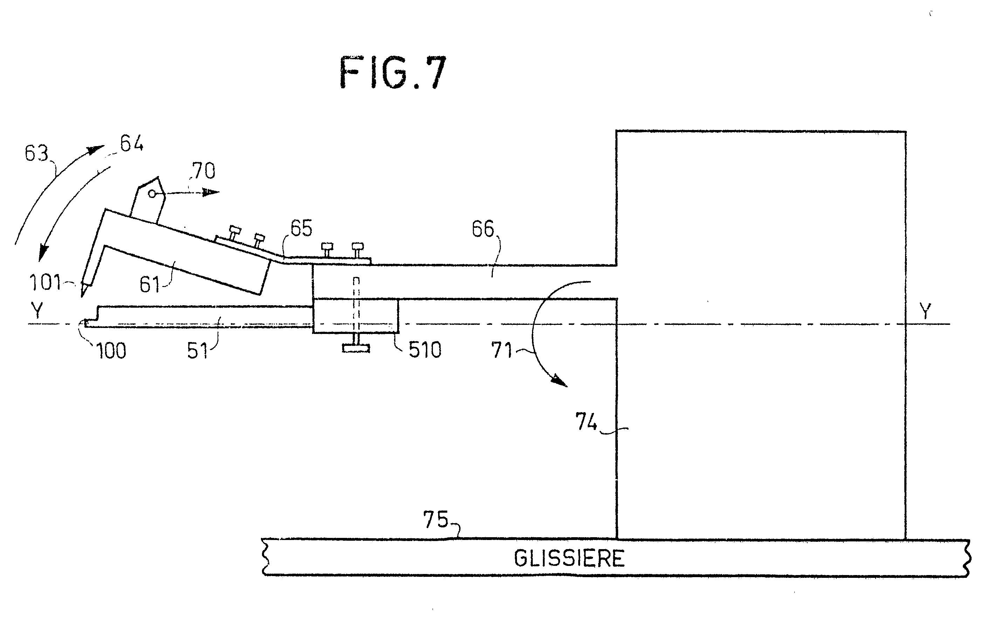

Pour que l'engrènement des fibres par le peigne soit possible, il est nécessaire que les peignes soient articulés (voir les flèches 63 et 64, figure 6). La figure 7 permet de comprendre le mécanisme de cette articulation.

On a représenté à la figure 7, de façon schématique ou symbolique, l'ensemble des moyens mécaniques de manipulation d'un peigne ou de la lame de séparation qui coopère avec ce peigne. Ces moyens sont en partie dédoublés pour permettre la manipulation simultanée des deux peignes et des deux lames, les manches étant usinés et disposés de telle sorte qu'ils puissent opérer sans gêne mutuelle.

Sur une glissière 75 représentée schématiquement, coulisse un bloc 74 qui permet de manœuvrer à la main deux bras supportant chacun un peigne et une lame. Seul est représenté le bras 66 associé au manche 61, portant le peigne 101 et au manche 51 portant la lame 100.

On doit remarquer, bien que cela ne soit pas visible sur la figure 7, que le plan médian du peigne 101 (voir les coupes des figures 1 à 4) et le plan de la lame 100 sont perpendiculaires au plan de figure (figure 7) car ces plans doivent être perpendiculaires à l'axe du câble (voir axe XX, figure 5).

Le bloc 74 permet d'assurer, par des commandes manuelles non représentées, les mouvements suivants:

a) mouvements 63 et 64 du peigne 101 par rapport à la lame 100. Ce mouvement est possible grâce à l'articulation souple du manche 61 et du bras 66 par une lame de ressort 65. La commande manuelle est symbolisée par la flèche 70. En fait, il existe un bras intermédiaire (non représenté) rendu solidaire du bras 66, mais pouvant coulisser par rapport à ce dernier;

b) mouvement 71 de rotation du bras 66 et du manche 51 rendu solidaire du bras 66 par une liaison mécanique 510. Ce mouvement de rotation s'effectue autour d'un axe YY passant par la lame et qui n'est pratiquement confondu avec l'axe du câble optique.

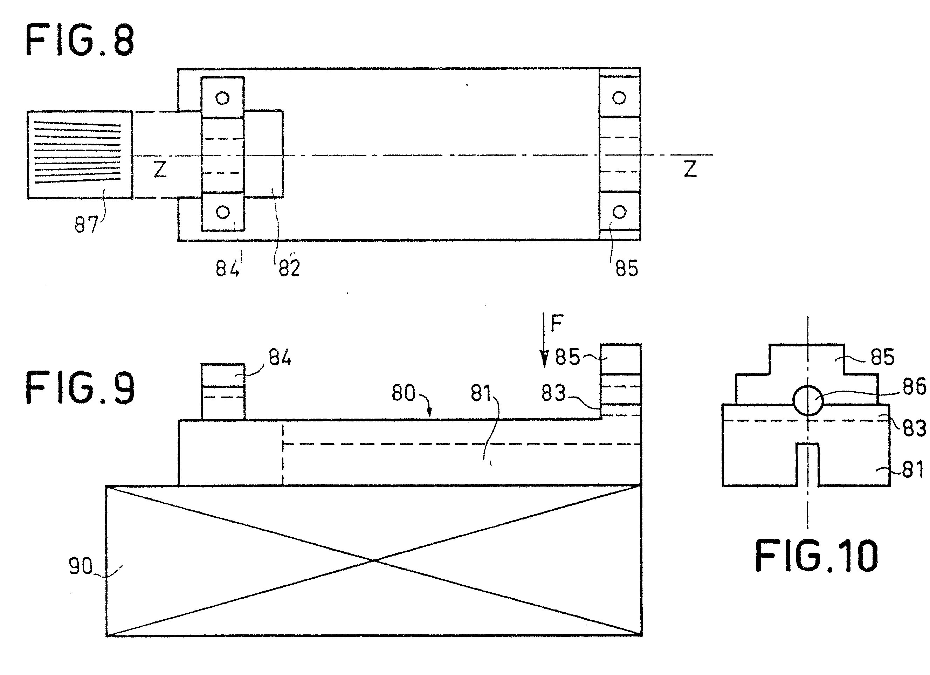

L'outillage servant à préparer le câble optique comprend en outre un chargeur représenté aux figures 8, 9 et 10. Ce chargeur sert à fixer le câble pendant le décapage de l'enveloppe de protection et le sectionnement du jonc central. Il immobilise la partie non décapée pendant l'étalement des fibres dans un même plan horizontal à l'aide de l'outillage précédemment décrit.

A cet effet, le chargeur comporte une plate-forme 80 qui est la partie supérieure d'un piédestal 81 relativement épais, dont une extrémité comporte une large encoche rectangulaire 82 destinée à recevoir une cale 87 portant à sa partie supérieure des encoches disposées de façon à guider les fibres optiques dans le plan horizontal de la plate-forme 80. A l'autre extrémité, le chargeur comporte une surélévation 83. Deux brides de serrage sont prévues. Une première bride 84 enjambe l'encoche 82, une deuxième bride 85 coiffe la surélévation 83, les parties en regard étant usinées de façon à laisser un passage circulaire 86 pour le câble optique. Une encoche circulaire 87 est aménagée dans la partie inférieure de la bride 84. Le passage 86 et l'encoche 87 sont situés sur un axe ZZ qui représente l'axe du câble optique avant préparation.

Les opérations de préparation du câble optique sont les suivantes:

— décapage du câble sur le chargeur, l'extrémité de la partie non décapée étant serrée par la bride 85, de telle sorte que la partie décapée commence à l'emplacement de la flèche F sur la figure 8, soit à quelques millimètres de la bride 85, au-dessus de la plate-forme 80. La bride 84 n'est pas montée à ce stade des opérations;

— épanouissement des fibres optiques pour libérer le jonc central et permettre de le sectionner sans couper les fibres,

— reconstitution de la forme primitive du câble décapé, en ce qui concerne la disposition des fibres optiques,

— première translation du bloc 74 et des moyens de manipulation des manches de peigne et de lame, en vue:

a) d'insérer les lames parallèlement à un plan vertical, au droit de la flèche F (figure 8),

b) mise en place des peignes pour réaliser l'engrènement de chacun d'eux comme il est représenté aux figures 1 à 4,

— deuxième translation du bloc 74 faisant coulisser les fibres dans les encoches des peignes; cette opération est nécessaire pour éloigner l'ensemble des lames et des peignes du support 90 (figure 9) servant à maintenir le chargeur pendant les opérations,

— exécution du mouvement de mise à plat des fibres par deux rotations à 90°, en sens inverses, des manches 66 (dont un seul est représenté à la figure 7),

— montage de la cale 87 et mise en place des fibres,

— serrage de la bride 84.

Les fibres sont alors prêtes à être coupées avec précision de telle sorte que leurs extrémités soient alignées.

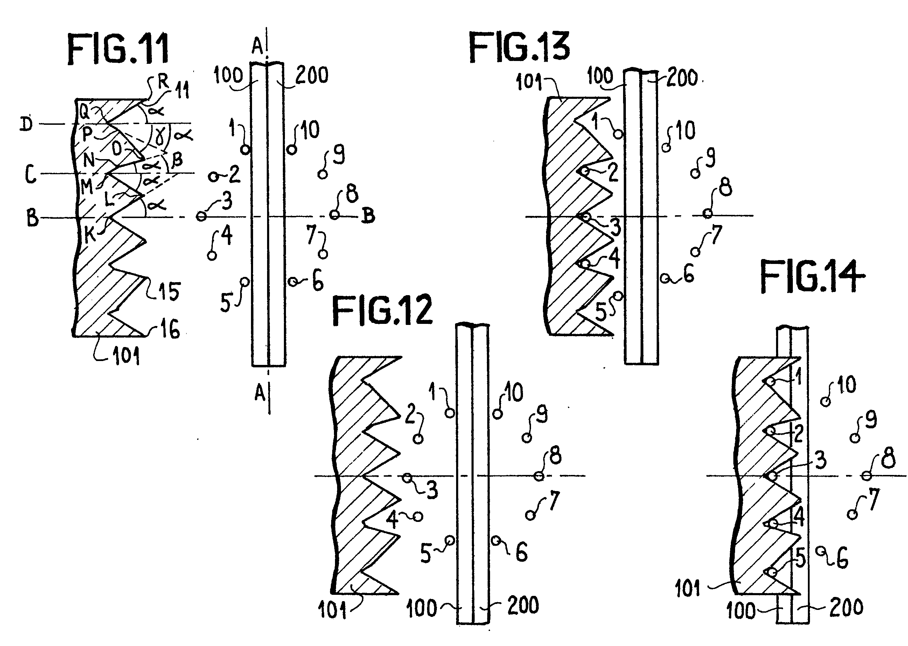

Sur les figures 11 à 14 sont représentées différentes phases comme sur les figures 1 à 4 avec un peigne de forme particulière réalisé selon un mode préférentiel de l'invention. Sur ces figures 11 à 14, les mêmes éléments que ceux des figures 1 à 4 portent les mêmes références. Le peigne 101 est symétrique par rapport à l'axe BB passant par le point K. Comme précédemment, ce peigne possède six dents. La partie KL de la dent 13 fait avec l'axe BB ou la verticale un angle α qui sera choisi de préférence de l'ordre de 30°. La partie ML de la dent 13 fait également un angle α avec la verticale, ainsi que la partie MN de la dent 12. Au point N de cette dent 12 située à proximité du point M, la distance entre les deux étant, pour fixer les idées, de l'ordre du diamètre des fibres optiques, la dent 12 prend une pente plus grande selon un angle β que fait sa partie NO avec la verticale ou l'axe CC. Cet angle β est inférieur à l'angle α et peut être en pratique de l'ordre de 15°, c'est-à-dire deux fois plus petit que l'angle α. La partie OP de la dent 12 fait, quant à elle, un angle γ avec la verticale ou l'axe DD, cet angle γ étant supérieur à l'angle α et de l'ordre de 45° en pratique, tandis que la partie PQ de la dent 12 fait un angle α avec la verticale ou l'axe DD de même que la partie QR de la dent 11. Cette forme particulière du peigne s'explique très bien lorsqu'on suit le déroulement des opérations sur les figures 11 à 14. On constate en effet que si la fibre optique 3 est sensiblement positionnée sur l'axe BB correspondant au fond de la gorge entre les dents 13 et 14, le sommet de chacune des dents, L, O et R vient se positionner tout à fait correctement par rapport auxdites fibres, c'est-à-dire sensiblement à mi-distance entre celles-ci. Ceci permet d'avoir un positionnement relativement moins précis de la fibre 3 par rapport au fond de la gorge K tout en assurant la pénétration d'une fibre entre chaque dent. Si l'on se reporte aux figures 1 à 4, on constate au contraire qu'avec le type de peigne décrit sur ces figures, les fibres extrêmes telles que 1 et 5 sont très proches des dents telles que 12 et 15 et une fausse manœuvre est dans ce cas beaucoup plus probable permettant par exemple la pénétration des deux fibres 4 et 5 entre les dents 14 et 15.

Bien entendu, les valeurs des angles α, β et γ n'ont été données qu'à titre d'exemple non limitatif et sont particulièrement bien adaptées au cas des câbles de dimensions habituelles de l'ordre de plusieurs millimètres.

## Revendications

1. Outillage servant à préparer des câbles à plusieurs fibres (1, 2, 3, ..., 10) en vue de leur aboutement fibre à fibre comportant des moyens d'étalement des fibres d'un même câble dans un plan unique caractérisé en ce que lesdits moyens sont constitués de deux peignes (101, 102), un premier peigne (101) étant capable d'engrener les fibres (1 à 5) situées d'un même côté d'un plan diamétral (AA) du câble, matérialisé par deux lames (100, 200), et un deuxième peigne (102) étant capable d'engrener les fibres (6 à 10) situées de l'autre côté du plan diamétral (AA), en ce que les dents d'un même peigne (101) ont un profil déterminé de manière à ne pas déranger la configuration des fibres (6 à 10) situées du côté opposé au plan diamétral (AA), et en ce qu'il comporte en outre des moyens permettant de ramener l'ensemble des fibres ainsi engrenées dans un même plan par rotations indépendantes des peignes (101, 102).

2. Outillage selon la revendication 1, caractérisé en ce que le fond de chaque encoche (110) est équidistant des fonds des encoches (110) voisines d'un même peigne (101).

3. Outillage selon l'une des revendications 1 ou 2, caractérisé en ce que chacun des peignes (101, 102) est supporté par un bras (66) par l'intermédiaire d'un manche (61), chacun des bras (66) étant mobile par rapport à l'autre autour d'un axe de rotation commun (YY) de façon à amener les fibres (1 à 10) de chacun des côtés dans un même plan.

4. Outillage selon la revendication 3, caractérisé en ce que le bras (66) supportant le peigne (101) par l'intermédiaire d'un manche (61) supporte une lame (100) par l'intermédiaire d'un autre manche (51) fixe par rapport au bras (66), le manche (61) ayant un mouvement de rotation par rapport au bras (66) d'axe perpendiculaire au bras (66) et contenu dans le plan de la lame (100).

5. Outillage selon la revendication 4, caractérisé en ce que le bras (66) est solidaire d'un bloc (74) monté sur une glissière (75).

6. Outillage selon l'une des revendications 1 à 5, caractérisé en ce qu'il comprend un dispositif qui comporte une plate-forme (80), des premiers moyens de serrage adaptés au câble, et des deuxièmes moyens prévus pour immobiliser les fibres extraites du câble.

7. Outillage selon l'une des revendications 1 à 6, caractérisé en ce que les dents ont une forme telle que leur sommet vient se positionner sensiblement à mi-distance entre les fibres à engrener.

## Patentansprüche

1. Werkzeug zur Vorbereitung von mehreren Fasern (1, 2, 3...10) enthaltenden Kabeln, um Fasern in stirnseitige Flucht zu bringen, mit Mitteln zum Ausbreiten der Fasern eines Kabels in einer gemeinsamen Ebene, dadurch gekennzeichnet, dass diese Mittel aus zwei Kämmen (101, 102) bestehen, nämlich einem ersten Kamm (101), der die Fasern (1 bis 5) erfassen kann, die auf einer Seite einer durch zwei Lamellen (100, 200) materialisierten Diametralebene (AA) des Kabels liegen, und einem zweiten Kamm (102), der die Fasern (6 bis 10) auf der anderen Seite dieser Diametralebene (AA) erfassen kann, dass die Zähne eines Kamms (101) ein so bestimmtes Profil besitzen, dass die Anordnung der Fasern (6 bis 10), die sich auf der Diametralebene (AA) gegenüberliegenden Seite befinden, nicht gestört wird, und dass das Werkzeug ausserdem Mittel aufweist, mit denen alle so erfassten Fasern durch unabhängige Drehung der Kämme (101, 102) in eine gemeinsame Ebene gebracht werden können.

2. Werkzeug nach Anspruch 1, dadurch gekennzeichnet, dass der Grund jeder Kammnut (110) gleichen Abstand zum Grund der benachbarten Kammnuten (110) desselben Kammes (101) besitzt.

3. Werkzeug nach einem der Ansprüche 1 oder 2, dadurch gekennzeichnet, dass jeder der Kämme (101, 102) von einem Arm (66) über einen Stiel (61) gehalten wird, wobei jeder dieser Arme (66) im Bezug zum anderen um eine gemeinsame Drehachse (YY) beweglich ist, so dass die Fasern (1 bis 10) jeder der Seiten in eine gemeinsame Ebene gelangen.

4. Werkzeug nach Anspruch 3, dadurch gekennzeichnet, dass der Arm (66), der den Kamm (101) über einen Stiel (61) hält, eine Lamelle (100) über einen weiteren bezüglich des Arms (66) festen Stiel (51) trägt, wobei der Stiel (61) bezüglich des Arms (66) um eine Achse drehbar ist, die senkrecht zum Arm (66) verläuft und in der Ebene der Lamelle (100) liegt.

5. Werkzeug nach Anspruch 4, dadurch gekennzeichnet, dass der Arm (66) mit einem Block (74) fest verbunden ist, der auf einer Gleitbahn (75) montiert ist.

6. Werkzeug nach einem der Ansprüche 1 bis 5, dadurch gekennzeichnet, dass es eine Vorrichtung mit einer Plattform (80), mit ersten an das Kabel angepassten Spannmitteln und mit zweiten Mitteln aufweist, die vorgesehen sind, um die aus dem Kabel herausgezogenen Fasern festzulegen.

7. Werkzeug nach einem der Ansprüche 1 bis 6, dadurch gekennzeichnet, dass die Zähne eine solche Form haben, dass ihre Spitze im wesentlichen in der Mitte zwischen den zu erfassenden Fasern sitzt.

**Claims**

1. A tool for preparing cables of several fibres (1, 2, 3 …10) with the aim of butt-jointing them fibre to fibre, comprising means for spreading out the fibres of one cable in a single plane, characterized in that these means are constituted by two combs (101, 102), a first comb (101) being able to engage the fibres (1 to 5) located on one side of a diametrical plane (AA) of the cable, this plane being represented by two blades (100, 200), and a second comb (102) being able to engage the fibres (6 to 10) located on the other side of the diametrical plane (AA), that the indentation of one comb (101) is shaped in such a way that it does not disturb the pattern of fibres 6 to 10) located on the opposite side of the diametrical plane (AA), and that it further comprises means adapted to put the set of fibres thus engaged into a common plane by independant rotations of the combs (101,102).

2. A tool according to claim 1, characterized in that the base of each indent (110) is equidistant from the bases of the adjacent indents (110) of the same comb (101).

3. A tool according to one of the claims 1 or 2, characterized in that each one of the combs (101, 102) is supported by an arm (66) through a handle (61), each of the arms (66) being mobile with respect to the other around a common axis of rotation (YY), so as to bring the fibres (1 to 10) of either side into a common plane.

4. A tool according to claim 3, characterized in that the arm (66) supporting the comb (101) through a handle (61) bears a blade (100) via another handle (51) which is fixed to the arm (66), the handle (61) having a rotation movement with respect to the arm (66) around an axis which is perpendicular to the arm (66) and which is contained in the plane of the blade (100).

5. A tool according to claim 4, characterized in that the arm (66) is integral with a block (74) mounted on a slide (75).

6. A tool according to one of the claims 1 to 5, characterized in that it comprises a device which includes a platform (80), first tightening means adapted to the cable and second means designed to immobilize the fibres extracted from the cable.

7. A tool according to one of the claims 1 to 6, characterized in that the teeth are shaped in such a way that their summit is substantially located at mid-way between the fibres which are to be engaged.

FIG.1

FIG.3

FIG.2

FIG.4

# FIG.5

51

52

200

100

102

62

61

101

# FIG.6

102

63

52

64

X

200

62

FIG.7

FIG.8

FIG.9

FIG.10

FIG.11

FIG.13

FIG.14

FIG.12